# EUROPEAN PATENT SPECIFICATION

(11) **EP 1 944 521 B1**
(45) Date of publication and mention of the grant of the patent: **05.09.2018**
(21) Application number: 07425807.0
(22) Date of filing: 19.12.2007
(51) Int. Cl.: F16D 55/228

(54) **Brake caliper in two parts**
Zweiteiliger Bremssattel
Etrier de frein en deux parties

(30) Priority: 19.12.2006 IT MI20062447
(43) Date of publication of application: 16.07.2008
(73) Proprietor: Freni Brembo S.p.A., 24035 Curno (Bergamo) (IT)
(72) Inventor: Maestrini, Luca, 24040 Osio Sopra, Bergamo (IT)
(74) Representative: Crippa, Paolo Ernesto

(56) References cited:
- DE-A1- 2 718 118
- JP-A- 9 072 357
- US-A1- 2006 231 353
- US-B1- 6 302 243

## Description

A brake caliper for a disc brake, in particular a brake caliper of the type in two parts forms the subject of the present invention.

**Calipers of this type are known from** DE2718118 **and** US2006/0231353**.**

Brake calipers in two parts are known, which comprise two half-calipers opposite with respect to the brake disc and separable from each other, due to advantages attained from mounting the components, such as for example brake pads or pistons for operating the latter, facilitated by the separability of the two half-calipers.

In order to limit the deformation of the caliper when braking, that is when the pads exert pressure on the brake disc, the brake calipers in two parts can be provided with one or more bridge elements arranged astride the disc for the reinforcement of the connection between the two half-calipers.

US 6,302,243 for example describes a brake caliper in two parts with two half-calipers one connected to the other by means of bolts at two side walls thereof. The two half-calipers delimit an aperture into which a spacer adapted to preserve the rectangular shape of such aperture during braking operations is inserted. The spacer is connected to the half-calipers by means of two screws which pass through the spacer from an end to the other passing through two smooth through holes. Such screws are screwed from the inner side into a first wall of the first half-caliper after having been fitted from outside into a second wall of the second half-caliper and passed through into the through holes of the spacer. Screwing is blocked when the heads of the screws abut against an external surface of the second wall of the second half-caliper. According to this configuration, the two screws can operate exclusively tension-wise, that is they serve as tie-rods, while the spacer may operate exclusively compression-wise.

However, such known brake calipers have some drawbacks.

The threaded seats of the first half-caliper in which the screws are screwed are directly made into the wall of one of the two half-calipers. Thus, in case the threads of such threaded seats are damaged, for example during screwing operations, the entire half-caliper requires replacement. This fact represents an inconvenience in terms of maintenance periods, since performing replacement operations requires complete disassembly of the caliper, and also in terms of maintenance costs, since the half-caliper requiring replacement is an expensive component which must be subjected to numerous machinings.

Furthermore, resistance of the connection between the screws and the first half-caliper is conditioned by the length of the contact section between the threads of the screw and the threads of the threaded seat of the first half-caliper. The maximum length of such contact section is limited by the thickness of the wall in which such threaded seat is made, that is by the dimensions of the first half-caliper itself. Thus, to ensure a suitably resistant connection such wall requires to be made substantially thick, thus entailing an overall exceedingly heavy caliper. On the contrary, in order to limit the weight of the caliper, such wall is made thinner, leading to the risk that such connection be not sufficiently reliable, hence consequently possibly damaging the threadings and therefore requiring extraordinary maintenance operations entailing problems regarding periods and costs explained beforehand.

Finally, in such known brake caliper some ordinary maintenance operations are difficult to perform. In fact, disconnection of the spacer requires unscrewing the tension screws from the threaded seats of the first half-caliper and removing them from the spacer passing them through its through holes. This consequently leads to the risk of inadvertent falling of the spacer or of its portion onto any of the components of the caliper when one or both of the screws are removed.

Thus, the objective of the present invention is that of providing a brake caliper capable of overcoming, at least partially, the abovementioned drawbacks with reference to the known art.

In particular, the objective of the present invention is that of providing a brake caliper capable of absorbing general limited deformations during braking operations, wherein the resistance against such deformation does not require overdimensioning of any of the two half-calipers.

Further objective of the present invention is that of providing a brake caliper in two parts shaped in such a manner that the maintenance operations require limited maintenance periods and costs being simple to perform, hence consequently reducing risks linked to inadvertent loss or damage of parts of the caliper itself during their operation.

These and other objectives are atatined by means of a brake caliper for a disc brake of a vehicle according to claim 1.

For a better comprehension and evaluation of the advantages of the invention, following are descriptions of some of its exemplifying but non-limiting embodiments, with reference to the attached drawings, wherein;

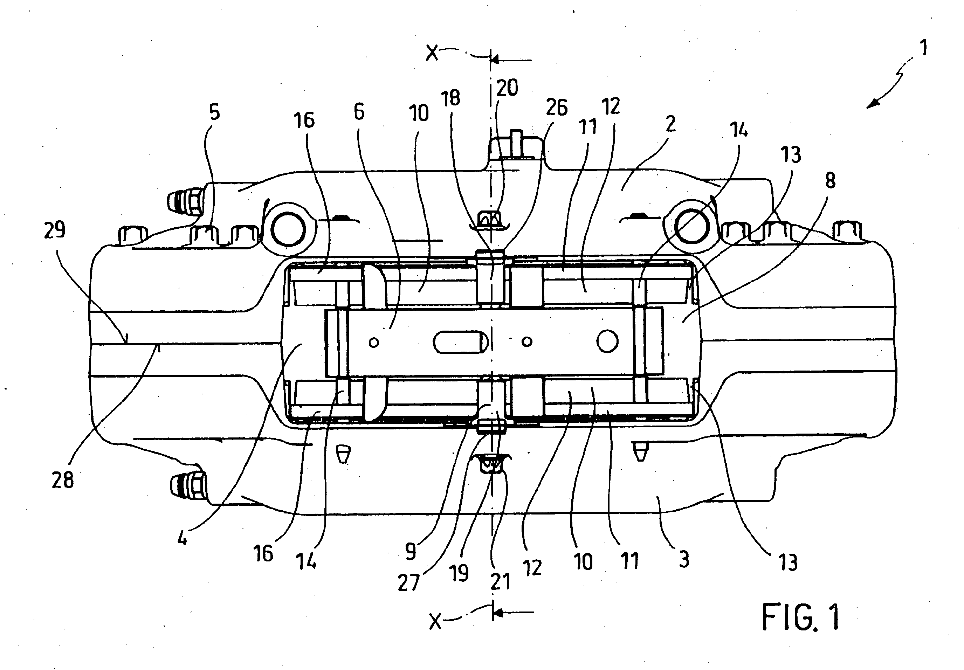

- Figure 1 is a side view of a brake caliper according to the invention;

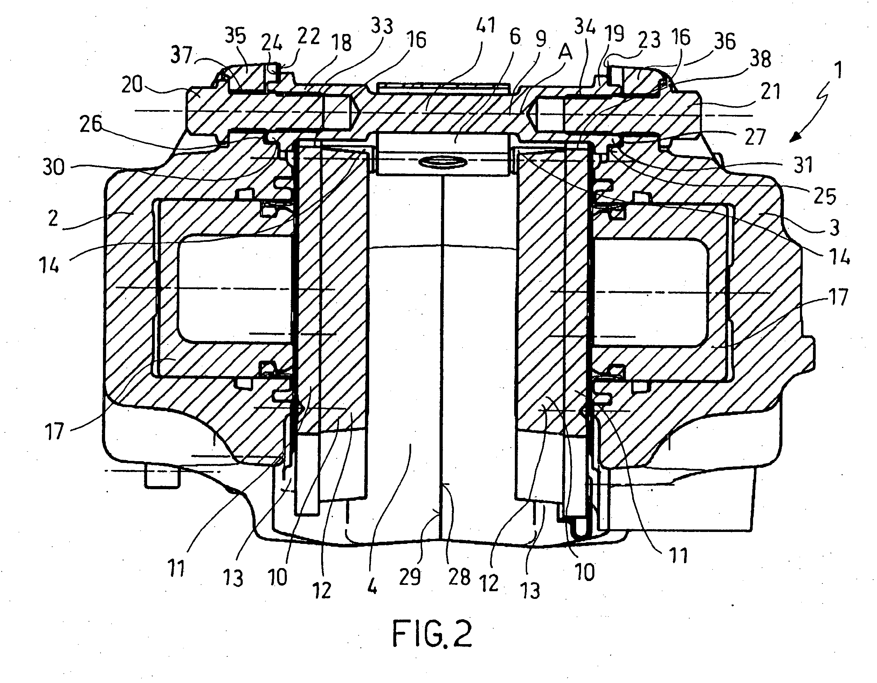

- Figure 2 is a sectional view according to line X-X in figure 1 of the brake caliper in figure 1;
- Figure 3 is a perspective view, partially exploded, of a detail of the brake caliper in figure 1;

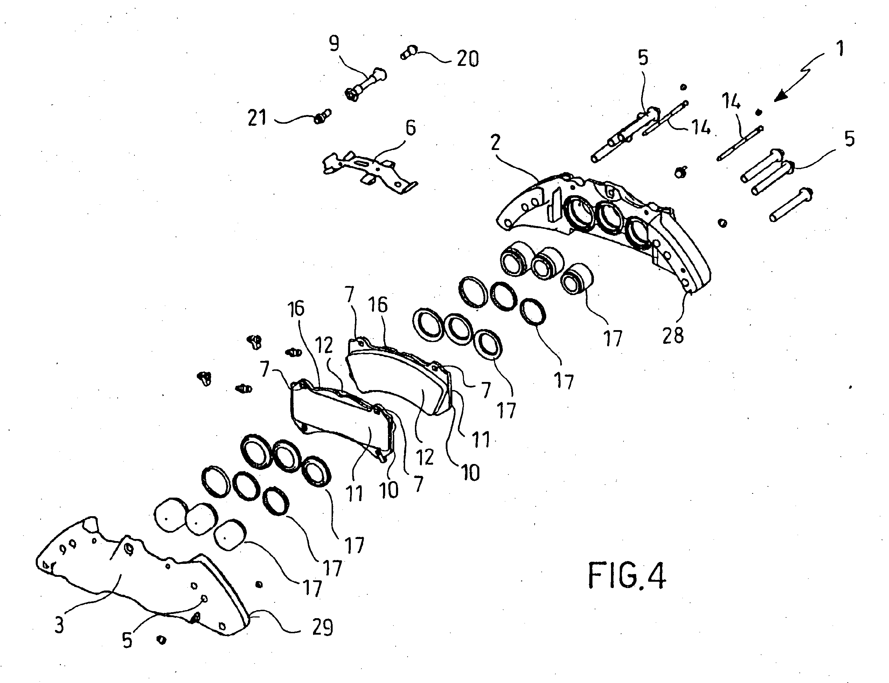

- Figure 4 is an exploded perspective view of the brake caliper in figure 1.

With reference to the figures, a brake caliper for a disc brake of a vehicle (not shown in the figures) is indicated with reference 1.

The caliper 1 can be fastened by means of fastening means (not shown in the drawings) to a suspension of the vehicle, while a brake disc (not shown in the drawings), of the disc brake provided with an annular braking band, is connectable to the wheel hub of the vehicle. The brake disc defines a plane P of the brake disc orthogonal to the rotation axis of the brake disc itself.

The caliper 1 comprises a first half-caliper 2 and a second half-caliper 3 one separable from the other and connectable by means of connection means 5, for example threaded connecting organs. Such first half-caliper 2 and second half-caliper 3 are shaped in such manner to delimit a disc space 4 adapted to accommodate a portion of the brake disc.

At least one, preferably two pads 10 comprising a plate 11, for example made of steel, provided with a coating friction material 12, can be arranged each on one side of the brake disc at its braking surface and housed in seats 13 delimited by the half-calipers 2 and 3. Preferably the pads 10 are held in position by two support pins 14 which can pass through holes or slots 7 formed in the plate 11 at one of its upper surfaces 16 in order to avoid radial movements (with reference to the rotation axis of the brake disc) of the pads 10.

The pads 10, movable in a direction perpendicular to the plane P of the brake disc, can be operated by thrust means, such as for example one or more hydraulic cylinder-piston groups 17 arranged in the half-calipers 2 and 3, in such a manner to tighten, through the friction coating 12, a section of the braking band of the brake disc.

In order to limit the general deformation of the calipers and also the reciprocal spacing of the two half-calipers 2 and 3 when the pads 10 exert pressure on the both sides of the brake disc, the brake caliper 1 comprises a bridge element 9 connectable in a removable manner to the two semi-calipers 2 and 3.

A first end 18 of the bridge element 9 is connectable to the first half-caliper 2 by means of a first screw 20, and a second end 19 of the bridge element 9, axially opposite to the first end 18, is connectable to the second half-caliper 3 through a second screw 21.

The first and the second screws 20 and 21 can be respectively screwed in a first and in a second threaded seat 33 and 34 preferably formed at the first end 18 and second end 19 respectively of the bridge element 9.

Since such first threaded seat 33 and second threaded seat 34 are formed in the bridge 9, the two half-calipers 2 and 3 cannot be subjected to damage due to the connection with the bridge element 9. Furthermore, the two half-calipers 2 and 3 do not require overdimensioning in order to ensure high resistance of the threaded connection with the bridge element 9.

Further advantage of the brake caliper 1 is that of ensuring simple and reliable maintenance operations since the bridge element 9 is capable of remaining connected to the calliper 1 even through only one of the two screws (for example when the other screw is unscrewed), projecting, and thus chances of falling inadvertently into the disc space 4 are extremely low.

Advantageously, in order to provide some references for proper positioning of the bridge element 9 with respect to the caliper 1, the first half-caliper 2 and the second half-caliper 3 respectively comprise a first positioning seat 26 adapted to accommodate at least partially the first end 18 of the bridge element 9 and a second positioning seat 27 adapted to accommodate at least partially the second end 19 of the bridge element 9.

With further advantage, such first positioning seat 26 and second positioning seat 27 are respectively formed by a first internal surface 22 of the first half-caliper 2, facing the plane P of the disc and by a second internal surface 23 of the second half-caliper 3, opposite with respect to the plane P of the disc to the first internal surface 22. The first end 18 and the second end 19 of the bridge element 9 respectively comprise a first end surface 24 and a second end surface 25 arranged in such a manner to face towards and abut against respectively the first internal surface 22 of the first positioning seat 26 and the second internal surface 23 of the second positioning seat 27.

In this manner, further reduction of risks regarding inadvertent falling into the disc space 4 of the bridge element 9 is ensured, since the latter is supported by the positioning seats 26 and 27 even in the absence of the screws 26 and 27.

Furthermore, such method of connection is advantageous regarding the process of machining of the two half-calipers 2 and 3. Each half-caliper is obtained in a manner one independent from the other starting from an unmachined element, for example an unmachined casting element, which is machined in the machine-tools at two different steps (whose order is not substantial). In a first of these two steps, corresponding to a first positioning with respect to the machine-tool, all the surfaces intended to face the outside of the caliper 1 (that is, in other words, the surfaces intended to face the wheel or the suspension of the vehicle) are machined, while at a second step, corresponding to a second positioning with respect to the machine-tool, surfaces intended face the plane P of the disc are machined, among which the first internal surface 22 and the second internal surface 23, as well as one or more contact surfaces, at which the two independent half-calipers 2 and 3 shall be connected, in particular a first contact surface 28 in the first half-caliper 2 and a second contact surface 29 in the second half-caliper 3.

Given the machining methods of the half-calipers, the accurate distances between all the surfaces intended to face the plane P of the disc and between all of the surfaces intended to face the external part of the caliper 1 are also known for each of them, with the exception of the tooling tolerances which on the other hand are known on the basis of the used machine-tool. On the contrary, due to the two different positions with respect to the machine-tool, the accurate reciprocal distances between such surfaces intended to face the outside of the caliper 1 and the ones intended to face the plane P of the disc are not known.

Thus, once the caliper 1 has been assembled also the distance between the first internal surface 22 of the first half-caliper 2 and the second internal surface 23 of the second half-caliper 3, that is the distance within which the bridge element 9 is to be inserted, are also known with high accuracy. In this manner, it is possible to establish the coupling conditions of the bridging element 9 with the half-calipers 2 and 3 once the caliper 1 has been assembled, in advance with high accuracy. Hence, it is also possible to set the preloading of the bridge element 9 in advance with high accuracy, once this has been fastened to the caliper, given that such preload depends on the clearance present between the half-calipers 2 and 3 and the bridge element 9.

Advantageously, the first and the second positioning seats 26 and 27 form a shape-coupling respectively with the first end 18 and the second end 19 of the bridge element 9, in such a manner to prevent the latter from rotating with respect to the half-calipers 2 and 3, which could lead to unscrewing of the screws 20 and 21.

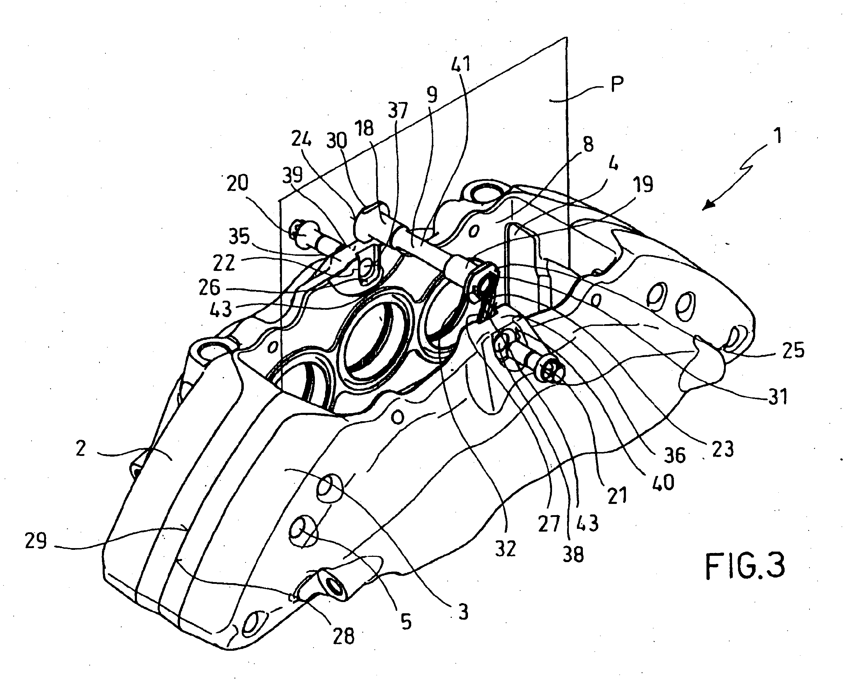

According to an embodiment, the first end 18 and the second end 19 of the bridge element 9 respectively comprise a first projecting portion 30 and a second projecting portion 31, preferably substantially annular, adapted to be inserted respectively in the first positioning seat 26 and in the second positioning seat 27 (figure 3). Such first and second positioning seats 26 and 27 comprise one or more side walls 43 preferably substantially rectilinear at such a distance to form a guide for the projecting portions of the bridge element 9. Such projecting portions comprise one or more, preferably two diametrically opposite square-shaped portions 32, in such a manner that the projecting portions can move in the positioning seats without rotating with respect to the seats.

The first screw 20 and- the second screw 21 can be inserted from outside into the first threaded-seat 33 and into the second threaded seat 34 through openings formed by the half-calipers. In particular, the first and the second half-calipers 2 and 3 can respectively comprise a first wall 35 passed through by a first through opening 37 and a second wall 36 passed through by a second through opening 38. Such first wall 35 and second wall 36 preferably extend outside the disc space 4 parallel to the plane P of the disc.

Once the bridge element 9 has been assembled to the caliper 1, the through openings 37 and 38 are preferably substantially coaxial with respect to the first threaded seat 33 and with the second threaded seat 34 and, still more preferably, they are smooth, in such a manner that the screws are free to slide inside them.

Advantageously, the first and the second internal surfaces 22 and 23 are respectively formed on the first wall 35 of the first half-caliper 2 and on the second wall 36 of the second half-caliper 3. Further advantageously, such first wall 35 and second wall 36 respectively form a first external surface 39 opposite to the first internal surface 22 and a second external surface 40 opposite to the second external surface 23. Such first external surface 39 and second external surface 40 function as supports for the heads of the first and the second screws 20 and 21 during their screwing into the first and second threaded seats 33 and 34 of the bridge element 9.

Given the methods through which it is connected to the half-calipers 2 and 3, the bridge element 9 is adapted to operate tension-wise, that is as tie-rods.

Advantageously, the bridge element 9 comprises a substantially axialsymmetric central portion 41, in such a manner to realise a substantially uniform distribution of normal stress in each of its sections. According to an embodiment, the central portion 41 and the ends 18 and 19 are of substantially circular section, in such a manner to allow the machining of the bridge element 9 in the lathe. Preferably, the ends 18 and 19 have a greater diameter than the diameter of the central portion so as to accommodate the threaded seats 33 and 34 and, still more preferably, such diameters are constant.

In order to limit bending stresses at the central portion 41, preferably the bridge element 9 is provided with a substantially rectilinear axis A, and, still more preferably, such rectilinear axis A is substantially coaxial to the first threaded seat 33 of the first end 18 and to the second threaded seat 34 of the second end 19.

In order for the bridge element 9 to be subjected to substantially normal stress at its section, its rectilinear axis A is advantageously directed orthogonally to the plane P of the disc.

In order to ensure enhanced mechanical resistance and keep the weight low at the same time, the bridge element 9 is advantageously made highly slim, and in particular, the ratio between the length of the bridge element 9 and a characteristic dimension of the section of its central portion 41 (for example its diameter) is greater than 5. Such ratio is preferably greater than 8.

According to an embodiment, the first and the second half-calipers 2 and 3 delimit an opening 8 adapted for the insertion of the pads 10 into the disc space 4. Such opening 8 has the further purpose of facilitating dissipation of the heat generated due to friction effect generated between the pads 10 and the brake disc.

Advantageously, the bridge element 9 is arranged at such opening 8 astride the disc space 4, in such a manner to counter the structural bending generated by the pistons for pressing the pads against the disc. Due to the slimness of the bridge element 9, the opening 8 is substantially not closed and thus such heat dissipation is not compromised.

The bridge element 9 is preferably arranged at a substantially central position with respect to the opening 8, in such a manner to partition it into two half-openings of a substantially equivalent extension and subjected to substantially equivalent deformation when the pads 10 exert pressure against the brake disc pushed by the thrust means.

According to an embodiment, in order to prevent the pads 10 from impact against the seats 13 when the vehicle is moving with the brakes disabled, at least a spring 6 which exerts an elastic preload on the pads 10 to hold them in the seats 13 even when the brake is disabled is provided and thus reduces occurrence of vibrations and noises of the brake due to the movement of the pads 10.

From the description above the person skilled in the art will appreciate how the brake caliper in two parts according to the invention overcomes some of the main drawbacks regarding brake calipers in two parts according to the known art.

In particular, the person skilled in the art will appreciate the fact that the threaded seats are not formed in the half-calipers but in the bridge element itself, and thus damage to such threaded seats entails replacement of the bridge element alone instead of the entire half-caliper, thus entailing remarkable saving in terms of maintenance costs and periods.

In addition, the person skilled in the art will appreciate how the connection between the bridge element and each of the two half-calipers ensures high resistance, since the contact section between the threads of the screws and the threaded seats depend on the length of the bridge element itself, and hence it can be lengthened depending on the requirements without requiring overdimensioning parts of the half-caliper.

Finally, the person skilled in the art will appreciate the fact that the bridge element is capable of remaining projectingly connected to the caliper even in case one of the screws is removed. Thus, during maintenance operations, chances that accidental errors occur causing it to fall are extremely low.

Regarding the embodiments described above, the person skilled in the art, with the objective of meeting needs and requirements, may adjust, modify or replace elements with others functionally equivalent, however without departing from the scope of the following claims.

## Claims

1. Brake caliper (1) for a disc brake of a vehicle, comprising:
- a first half-caliper (2) and a second half-caliper (3) separable from the first half-caliper (2);
- means (5) for reciprocal connection of said first half-caliper (2) and second half-caliper (3);
- a bridge element (9) connectable in a removable manner to the two half-calipers (2,3) comprising a first end (18) and a second end (19) axially opposite to the first end(18),
wherein said first end (18) of said bridge element (9) is connectable to said first half-caliper (2) by means of a first screw (20) and said second end (19) of said bridge element (9) is connectable to said second half-caliper (3) by means of a second screw (21);
said bridge element (9) is provided with a substantially rectilinear axis (A);
said first end (18) and second end (19) of the bridge element (9) respectively form a first threaded seat (33) into which said first screw (20) can be screwed and a second threaded seat (34) into which said second screw (21) can be screwed;
said first threaded seat (33) and second threaded seat (34) of the bridge element (9) are substantially coaxial to its said axis (A)
**characterised in that**
said first half-caliper (2) and second half-caliper (3) respectively comprise a first (26) and a second (27) positioning seats adapted to accommodate at least partially said first (18) and second (19) end of the bridge element (9), and
said first positioning seat (26) forms a shape-coupling with said first end (18) of the bridge element (9) and said second positioning seat (27) forms a shape-coupling with said second end (19) of the bridge element (9), in such a manner to prevent rotations between said bridge Xelement (9) and said half-calipers (2,3).

2. Brake caliper (1) according to the preceding claim, wherein said first (26) and second (27) positioning seats are respectively formed by a first internal surface (22) of the first half-caliper (2) and by a second internal surface (23) opposite to the first surface (22) of the second half-caliper (3).

3. Brake caliper (1) according to claim **1**, wherein said first screw (20) and second screw (21) can be screwed into said first threaded seat (33) and second threaded seat (34) respectively via a first through opening (37) formed in the first half-caliper (2) and a second through opening (38) formed in the second half-caliper (3).

4. Brake caliper (1) according to the preceding claim, wherein said first through opening (37) and second through opening (38) are smooth.

5. Brake caliper (1) according to claim **3** or 4, wherein said first through opening (37) and second through opening (38) comprise supports for the heads of said first screw (20) and second screw (21) adapted to block the screwing of both the latter respectively in said first (33) and second (34) threaded seats.

6. Brake caliper (1) according to any of the preceding claims, wherein said first screw (20) and second screw (21) stress said bridge-element (9) tension-wise.

7. Brake caliper (1) according to any of the preceding claims, wherein said bridge element (9) comprises a substantially axialsymmetric central portion (41) .

8. Brake caliper (1) according to the preceding claim, wherein said central portion (41) has a substantially constant cross-section with a characteristic dimension substantially constant too, the ratio between the length of said bridge element (9) and said characteristic dimension being greater than 5.

9. Brake caliper (1) according to the preceding claim, wherein said ratio is greater than 8.

10. Brake caliper (1) according to any of claims **1** or 7 to 9**,** wherein the axis (A) of said bridge element (9) is substantially orthogonal to a plane (P) of a brake disc adapted to be at least partially accommodated into a disc space (4) delimitated by said half-caliper (2) and second half-caliper (3).

11. Brake caliper (1) according to any of the preceding claims, wherein said bridge element (9) is arranged astride said disc space (4) at an opening (8) delimitated by said first (2) and second (3) half-caliper and adapted for the insertion into said disc space (4) of one or more pads (10) intended to engage said brake disc.

12. Brake caliper (1) according to claim 10 or 11, wherein said bridge element (9) is one and arranged at a substantially central position with respect to said opening (8).

13. Disc brake comprising a brake caliper (1) according to any of the preceding claims.

14. Vehicle comprising a disc brake according to the preceding claim.

## Patentansprüche

1. Bremssattel (1) für eine Scheibenbremse eines Fahrzeugs, umfassend:
- einen ersten Halbsattel (2) und einen zweiten Halbsattel (3), welcher von dem ersten Halbsattel (2) trennbar ist;
- Mittel (5) zum reziproken Verbinden des ersten Halbsattels (2) und des zweiten Halbsattels (3);
- ein Brückenelement (9), welches in einer entfernbaren Weise mit den beiden Halbsätteln (2, 3) verbindbar ist, umfassend ein erstes Ende (18) und ein zweites Ende (19), welches dem ersten Ende (18) axial entgegengesetzt ist,
wobei das erste Ende (18) des Brückenelements (9) mit dem ersten Halbsattel (2) mittels einer ersten Schraube (20) verbindbar ist und das zweite Ende (19) des Brückenelements (9) mit dem zweiten Halbsattel (3) mittels einer zweiten Schraube (21) verbindbar ist;
wobei das Brückenelement (9) mit einer im Wesentlichen geradlinigen Achse (A) bereitgestellt ist;
wobei das erste Ende (18) und das zweite Ende (19) des Brückenelements (9) jeweils einen ersten Gewindesitz (33), in welchen die erste Schraube (20) geschraubt werden kann, und einen zweiten Gewindesitz (34) bilden, in welchen die zweite Schraube (21) geschraubt werden kann;
wobei der erste Gewindesitz (33) und der zweite Gewindesitz (34) des Brückenelements (9) im Wesentlichen koaxial zu dessen Achse (A) sind,
**dadurch gekennzeichnet, dass**
der erste Halbsattel (2) und der zweite Halbsattel (3) jeweils einen ersten (26) und einen zweiten (27) Positionierungssitz umfassen, welche dazu eingerichtet sind, das erste (18) und das zweite (19) Ende des Brückenelements (9) wenigstens teilweise aufzunehmen, und
wobei der erste Positionierungssitz (26) eine Formkopplung mit dem ersten Ende (18) des Brückenelements (9) bildet und der zweite Positionierungssitz (27) eine Formkopplung mit dem zweiten Ende (19) des Brückenelements (9) bildet, so dass Rotationen zwischen dem Brückenelement (9) und den Halbsätteln (2, 3) verhindert werden.

2. Bremssattel (1) nach dem vorhergehenden Anspruch, wobei der erste (26) und der zweite (27) Positionierungssitz jeweils durch eine erste innere Fläche (22) des ersten Halbsattels (2) und durch eine zweite innere Fläche (23), welche der ersten Fläche (22) entgegengesetzt ist, des zweiten Halbsattels (3) gebildet sind.

3. Bremssattel (1) nach Anspruch 1, wobei die erste Schraube (20) und die zweite Schraube (21) in den ersten Gewindesitz (33) bzw. in den zweiten Gewindesitz (34) über eine erste Durchgangsöffnung (37), welche in dem ersten Halbsattel (2) gebildet ist, und eine zweite Durchgangsöffnung (38), welche in dem zweiten Halbsattel (3) gebildet ist, geschraubt werden können.

4. Bremssattel (1) nach dem vorhergehenden Anspruch, wobei die erste Durchgangsöffnung (37) und die zweite Durchgangsöffnung (38) glatt sind.

5. Bremssattel (1) nach Anspruch 3 oder 4, wobei die erste Durchgangsöffnung (37) und die zweite Durchgangsöffnung (38) Halterungen für die Köpfe der ersten Schraube (20) und der zweiten Schraube (21) umfassen, welche dazu eingerichtet sind, das Schrauben der beiden Letzteren in jeweils den ersten (33) und den zweiten (34) Gewindesitz zu blockieren.

6. Bremssattel (1) nach einem der vorhergehenden Ansprüche, wobei die erste Schraube (20) und die zweite Schraube (21) das Brückenelement (9) in einer spannenden Weise belasten.

7. Bremssattel (1) nach einem der vorhergehenden Ansprüche, wobei das Brückenelement (9) einen im Wesentlichen axialsymmetrischen zentralen Abschnitt (41) umfasst.

8. Bremssattel (1) nach dem vorhergehenden Anspruch, wobei der zentrale Abschnitt (41) einen im Wesentlichen konstanten Querschnitt mit einer charakteristischen Dimension, welche im Wesentlichen auch konstant ist, aufweist, wobei das Verhältnis zwischen der Länge des Brückenelements (9) und der charakteristischen Dimension größer als 5 ist.

9. Bremssattel (1) nach dem vorhergehenden Anspruch, wobei das Verhältnis größer als 8 ist.

10. Bremssattel (1) nach einem der Ansprüche 1 oder 7 bis 9, wobei die Achse (A) des Brückenelements (9) im Wesentlichen orthogonal zu einer Ebene (P) einer Bremsscheibe ist, welche dazu eingerichtet ist, in einem Scheibenraum (4) wenigstens teilweise aufgenommen zu sein, welcher durch den Halbsattel (2) und den zweiten Halbsattel (3) begrenzt ist.

11. Bremssattel (1) nach einem der vorhergehenden Ansprüche, wobei das Brückenelement (9) rittlings des Scheibenraums (4) an einer Öffnung (8) angeordnet ist, welche durch den ersten (2) und den zweiten (3) Halbsattel begrenzt ist und für das Einführen in den Scheibenraum (4) von einem oder mehreren Klötzen (10) eingerichtet ist, welche dazu bestimmt sind, mit der Bremsscheibe einzugreifen.

12. Bremssattel (1) nach Anspruch 10 oder 11, wobei das Brückenelement (9) eines ist und an einem im Wesentlichen zentralen Abschnitt in Bezug auf die Öffnung (8) angeordnet ist.

13. Scheibenbremse, umfassend einen Bremssattel (1) nach einem der vorhergehenden Ansprüche.

14. Fahrzeug, umfassend eine Scheibenbremse nach dem vorhergehenden Anspruch.

## Revendications

1. Étrier de frein (1) pour un frein à disque d'un véhicule, comprenant :
- un premier demi-étrier (2) et un second demi-étrier (3) séparable du premier demi-étrier (2) ;
- des moyens (5) pour le raccordement réciproque desdits premier demi-étrier (2) et second demi-étrier (3) ;
- un élément de pont (9) pouvant être raccordé de manière amovible aux deux demi-étriers (2, 3) comprenant une première extrémité (18) et une seconde extrémité (19) axialement opposée à la première extrémité (18),
dans lequel ladite première extrémité (18) dudit élément de pont (9) peut être raccordée audit premier demi-étrier (2) au moyen d'une première vis (20) et ladite seconde extrémité (19) dudit élément de pont (9) peut être raccordée audit second demi-étrier (3) au moyen d'une seconde vis (21) ;
ledit élément de pont (9) est doté d'un axe sensiblement rectiligne (A) ;
lesdites première extrémité (18) et seconde extrémité (19) de l'élément de pont (9) forment respectivement un premier siège fileté (33) dans lequel ladite première vis (20) peut être vissée et un second siège fileté (34) dans lequel ladite seconde vis (21) peut être vissée ;
lesdits premier siège fileté (33) et second siège fileté (34) de l'élément de pont (9) sont sensiblement coaxiaux à son dit axe (A),
**caractérisé en ce que**
lesdits premier demi-étrier (2) et second demi-étrier (3) comprennent respectivement un premier (26) et un second (27) sièges de positionnement adaptés pour loger au moins partiellement lesdites première (18) et seconde (19) extrémités de l'élément de pont (9), et
ledit premier siège de positionnement (26) forme un couplage de forme avec ladite première extrémité (18) de l'élément de pont (9) et ledit second siège de positionnement (27) forme un couplage de forme avec ladite seconde extrémité (19) de l'élément de pont (9) de manière à empêcher des rotations entre ledit élément de pont (9) et lesdits demi-étriers (2, 3).

2. Étrier de frein (1) selon la revendication précédente, dans lequel lesdits premier (26) et second (27) sièges de positionnement sont respectivement formés par une première surface interne (22) du premier demi-étrier (2) et par une seconde surface interne (23) opposée à la première surface (22) du second demi-étrier (3).

3. Étrier de frein (1) selon la revendication 1, dans lequel lesdites première vis (20) et seconde vis (21) peuvent être vissées dans lesdits premier siège fileté (33) et second siège fileté (34) respectivement via une première ouverture traversante (37) formée dans le premier demi-étrier (2) et une seconde ouverture traversante (38) formée dans le second demi-étrier (3).

4. Étrier de frein (1) selon la revendication précédente, dans lequel lesdites première ouverture traversante (37) et seconde ouverture traversante (38) sont lisses.

5. Étrier de frein (1) selon la revendication 3 ou 4, dans lequel lesdites première ouverture traversante (37) et seconde ouverture traversante (38) comprennent des supports pour les têtes desdites première vis (20) et seconde vis (21) adaptées pour bloquer le vissage des deux dernières respectivement dans lesdits premier (33) et second (34) sièges filetés.

6. Étrier de frein (1) selon l'une quelconque des revendications précédentes, dans lequel lesdites première vis (20) et seconde vis (21) contraignent ledit élément de pont (9) sous tension.

7. Étrier de frein (1) selon l'une quelconque des revendications précédentes, dans lequel ledit élément de pont (9) comprend une portion centrale sensiblement axisymétrique (41).

8. Étrier de frein (1) selon la revendication précédente, dans lequel ladite portion centrale (41) présente une section transversale sensiblement constante avec une dimension caractéristique sensiblement constante aussi, le rapport entre la longueur dudit élément de pont (9) et ladite dimension caractéristique étant supérieur à 5.

9. Étrier de frein (1) selon la revendication précédente, dans lequel ledit rapport est supérieur à 8.

10. Étrier de frein (1) selon l'une quelconque des revendications 1 ou 7 à 9, dans lequel l'axe (A) dudit élément de pont (9) est sensiblement orthogonal à un plan (P) d'un frein à disque adapté pour être au moins partiellement logé dans un espace de disque (4) délimité par lesdits demi-étrier (2) et second demi-étrier (3).

11. Étrier de frein (1) selon l'une quelconque des revendications précédentes, dans lequel ledit élément de pont (9) est disposé à cheval dudit espace de disque (4) au niveau d'une ouverture (8) délimitée par lesdits premier (2) et second (2) demi-étrier et adaptée pour l'insertion dans ledit espace de disque (4) d'un ou plusieurs patins (10) destinés à mettre en prise ledit frein à disque.

12. Étrier de frein (1) selon la revendication 10 ou 11, dans lequel ledit élément de pont (9) est unique et disposé dans une position sensiblement centrale par rapport à ladite ouverture (8).

13. Frein à disque comprenant un étrier de frein (1) selon l'une quelconque des revendications précédentes.

14. Véhicule comprenant un frein à disque selon la revendication précédente.
